# EUROPÄISCHE PATENTSCHRIFT

(11) **EP 2 268 508 B1**
(45) Veröffentlichungstag und Bekanntmachung des Hinweises auf die Patenterteilung: **23.12.2015**
(21) Anmeldenummer: 09735265.2
(22) Anmeldetag: 24.02.2009
(51) Int. Cl.: B60R 21/013, B60R 21/01

(54) **VERFAHREN UND STEUERGERÄT ZUR ANSTEUERUNG VON PERSONENSCHUTZMITTELN FÜR EIN FAHRZEUG**
METHOD AND CONTROL DEVICE FOR TRIGGERING PERSON PROTECTING MEANS IN A VEHICLE
PROCÉDÉ ET APPAREIL DE COMMANDE POUR COMMANDER DES MOYENS DE PROTECTION DES PERSONNES POUR UN VÉHICULE

(30) Priorität: 22.04.2008 DE 102008001301
(43) Veröffentlichungstag der Anmeldung: 05.01.2011
(73) Patentinhaber: Robert Bosch GmbH, 70442 Stuttgart (DE)
(72) Erfinder: Jansen, Alexander, 70437 Stuttgart (DE); Boehm, Volker, Hemmingen 71282 (DE)
(86) Internationale Anmeldenummer: PCT/EP2009/052139
(87) Internationale Veröffentlichungsnummer: WO 2009/130074

(56) Entgegenhaltungen:
- EP-A- 1 844 988
- DE-A1-102004 020 681
- DE-A1-102006 031 237

## Beschreibung

### Stand der Technik

Die Erfindung betrifft ein Verfahren bzw. ein Steuergerät zur Ansteuerung von Personenschutzmitteln für ein Fahrzeug nach der Gattung der unabhängigen Patentansprüche.

Aus DE 10 2004 020 681 A1 ist eine Vorrichtung zur Ansteuerung von Personenschutzmitteln bekannt. Dabei wird vorgeschlagen, Feuersequenzen mit einem niedrigeren Takt vorauszuberechnen, um Laufzeit einzusparen. Die Feuersequenzen beinhalten, welche Personenschutzmittel angesteuert werden. 20 Weiterhin ist bekannt ein Algorithmusmodul vorzusehen, dass die Sensordaten dahingehend verarbeiten, dass daraus eine Ansteuerungsentscheidung für die Personenschutzmittel bestimmt wird. In Abhängigkeit von einem Schwellwertvergleich im Rahmen dieses Algorithmus werden die Feuerflaggen gesetzt, die anzeigen, dass bestimmte Personenschutzmittel zu zünden sind. Dies wird dann einem Softwaremodul übertragen, das mittels der Parametersätze bezüglich Umweltdaten die Feuerdaten oder Ansteuerdaten in Echtzeit bestimmt.

Ein der EP 1 844 988 A1 wird ein Verfahren und eine Vorrichtung zur Ansteuerung von Personenschutzmitteln vorgeschlagen, wobei nach einer Entscheidung zur Ansteuerung der Personenschutzmittel noch eine Überprüfung wenigstens einer Auswerteschaltung erfolgt. Die Auswerteschaltung hat dabei die Entscheidung getroffen, die Personenschutzmittel anzusteuern. In Abhängigkeit von der Überprüfung wird die Entscheidung gegebenenfalls unterdrückt. Die Auswerteschaltung schreibt die Entscheidung in einen Speicher, und es ist eine Logikschaltung vorgesehen, die eine Übertragung der Entscheidung aus dem Speicher zu wenigstens einem Zündkreis veranlasst.

In der DE 10 2006 031 237 A1 wird ein Steuergerät zur Ansteuerung von Personenschutzmitteln bzw. eine Vorrichtung zur Ansteuerung von Personenschutzmitteln bzw. ein Verfahren zur Ansteuerung von Personenschutzmitteln vorgeschlagen, wobei vom Steuergerät zu einem ausgelagerten Unfallsensor ein Synchronimpuls versendet wird und das Steuergerät die Daten des wenigstens einen Unfallsensors in Abhängigkeit von einer Timermessung ab dem Synchronimpuls verarbeitet.

### Offenbarung der Erfindung

Das erfindungsgemäße Verfahren bzw. das erfindungsgemäße Steuergerät zur Ansteuerung von Personenschutzmitteln für ein Fahrzeug mit den Merkmalen der unabhängigen Patentansprüche haben demgegenüber den Vorteil, dass die Last, die die Auswerteschaltung bezüglich der Laufzeit zu bewältigen hat, reduziert 35 wird, so dass die Systemperformance und die Robustheit besonders in Worst-Case-Scenarios verbessert wird. Darüber hinaus können Auswerteschaltungen verwendet werden, die mit der bekannten Konfiguration die Laufzeitanforderungen nicht mehr erfüllen können. Dies reduziert den Aufwand für ein erfindungsgemäßes Steuergerät. Erfindungsgemäß wird die Abfolge von Verfahrensschritten so geändert, dass das Füllen eines Versendespeichers mit ersten Ansteuerdaten aus einem vorhergehenden Zyklus stattfindet, ohne dass die Daten tatsächlich gesendet werden und bevor die Sensordaten im aktuellen Zyklus eingelesen werden. Der Versendespeicher wird vor dem Start der Auswertung der Sensordaten dazu konfiguriert, dass die Ansteuerdaten zumindest teilweise parallel, zum Auswertealgorithmus übertragen werden. Dabei kann es vorgesehen sein, dass das Triggern der Übertragung der Ansteuerdaten im Versendespeicher erfolgt vor dem Start des Auswertealgorithmus. Die Übertragung übernimmt dabei je nach Prozessortyp das oder die entsprechenden Makros im Prozessor, beispielsweise eine gepufferte SPI (Serial Peripherial Interface) oder eine Kombination aus einer ungepufferten SPI mit DMA (Direct Memory Access) und Puffer im RAM (Random Access Memory), so dass der Prozessorkem parallel dazu beispielsweise den Auswertealgorithmus verarbeiten kann. D.h. der Prozessor verarbeitet den Auswertealgorithmus, während bestimmte Makros völlig autark, bis auf den Trigger, für die Datenübertragung sorgen.

Durch die Verwendung des Versendespeichers und die Umstellung der Sequenz der Verfahrensschritte wird eine Laufzeitreduktion erreicht.

Da die Verarbeitungslast der Auswerteschaltung nach einem Crash sehr groß ist, denn die Sensordaten müssen verarbeitet werden und die Ansteuerdaten erzeugt werden, verteilt die Erfindung mit der Umstellung der Abfolge der Verfahrensschritte die Laufzeitlast über zwei aufeinanderfolgende Echtzeitzyklen unter der Annahme, dass die Verarbeitungslast und das Erzeugen der Ansteuerdaten geringer im nachfolgenden Zyklus ist D. h. eine Laufzeitspitze, die durch das Füllen des Versendespeichers bedingt ist, wird auf den nachfolgenden Zyklus verschoben, indem die notwendige Laufzeit für die Berechnung des Auswertealgorithmus und das Erzeugen der Ansteuerdaten nicht mehr auf dem höchsten Niveau sind. Aufgrund des Aufteilens zum einen in das Füllen des Versendespeichers und zum anderen in das Versenden der Daten aus dem Versendespeicher, wobei das Versenden zumindest teilweise parallel zum Auswertealgorithmus läuft, wird die Laufzeit weiter reduziert. Das Füllen des Versendespeichers bedingt das Schreiben der Feuerbefehle in den Speicher und der entsprechenden Adressdaten in diesen Versendespeicher. Dies gilt insbesondere, wie es aus den abhängigen Ansprüchen hervorgeht, bei der Verwendung einer SPI (Serial Peripheral Interface) -Übertragung, d.h. mit einer digitalen seriellen Schnittstelle.

Vorliegend bedeutet das Ansteuern von Personenschutzmitteln für ein Fahrzeug die Aktivierung von beispielsweise Airbags, Gurtstraffern, crashaktiven Kopfstützen, Fussgängerschutzmitteln usw.

Die zyklische Wiederholung bedeutet, dass die Verfahrensschritte bzw. das Echtzeitsteuerelement verschiedene Verfahrensschritte bzw. Komponenten in einer vorbestimmten Reihenfolge in jedem Zyklus aufrufen. Die Zyklen folgen aufeinander. Dabei kann eine unmittelbare Abfolge vorgesehen sein oder auch eine Pause zwischen diesen Zyklen. Es ist weiterhin möglich, dass auch andere nicht zu diesem Zyklus gehörige Verfahrensschritte zwischen den Zyklen ausgeführt werden.

Das Füllen des Versendespeichers mit ersten Ansteuerdaten aus einem vorhergehenden Zyklus bedeutet, dass im vorhergehenden Zyklus diese ersten Ansteuerdaten in Folge der Auswertung der Sensordaten erzeugt wurden und nunmehr in den Versendespeicher geladen werden. Dazu zählen dann beispielsweise nicht nur Feuerbefehle, sondern auch andere Daten, die für die Übertragung der ersten Ansteuerdaten aus dem Versendespeicher notwendig sind. Dazu zählen dann, wie oben angegeben, Adressdaten usw. Der Versendespeicher kann dabei Teil eines Mikrocontrollers sein oder ein eigenes elektronisches Bauteil oder Teil eines von der Auswerteschaltung unabhängigen integrierten Schaltkreises.

Das Einlesen des wenigstens einen Unfallsensorsignals bedeutet, dass bereitgestellte Unfallsensorsignale, beispielsweise Beschleunigungssignale oder Luftdrucksignale oder Körperschallsignale oder Umfeldsignale, die von einer Schnittstelle bereitgestellt werden, in eine Auswerteschaltung eingelesen werden. Dies ist notwendig, um die nachfolgende Verarbeitung zu gewährleisten.

Die Übertragung der ersten Ansteuerdaten aus dem Versendespeicher zu einer Ansteuerungsschaltung bedeutet, dass der Versendespeicher veranlasst wird, diese Daten zu übertragen und zwar vorzugsweise zumindest teilweise parallel zur Bildung der Ansteuerungsentscheidung. Die Übertragung erfolgt an eine Ansteuerungsschaltung, die ebenfalls beispielsweise Teil eines System-ASICs sein kann oder aus mehreren integrierten Schaltkreisen oder anderen Zusammenstellungen gebildet sein kann. Vorzugsweise wird für die Übertragung, wie oben angegeben, das SPI-Protokoll verwendet.

Die Ansteuerungsentscheidung wird in Abhängigkeit von dem wenigstens einen Unfallsensorsignal gebildet. Dazu finden beispielsweise Klassifizierungen bzw. Schwellwertvergleiche statt, um festzustellen, ob eine Ansteuerungssituation in Folge des eingelesenen wenigstens einen Unfallsensorsignals vorliegt. Dies bedeutet vorliegend, es läuft der Auswertealgorithmus ab. Es können auch mehrere Auswertealgorithmen verwendet werden.

Dann folgt der Schritt des Erzeugens der zweiten Ansteuerdaten in Abhängigkeit von der Ansteuerungsentscheidung. Das bedeutet, ist die Ansteuerungsentscheidung so, dass die Ansteuerung von Personenschutzmitteln notwendig ist, werden vorliegend Ansteuerdaten hierfür gebildet, um die entsprechenden Personenschutzmittel ansteuern zu können.

Zwischen diesen einzelnen Verfahrensschritten können andere Verfahrensschritte, die vorliegend nicht notwendig zum Verständnis der Erfindung sind, ausgeführt werden. Auch kann in einem Zeitscheibenverfahren Verfahrensschritte anderer Zyklen zwischen den einzelnen Verfahrensschritten ausgeführt werden.

Das erfindungsgemäße Steuergerät ist ein elektrisches Gerät, dass das wenigstens ein Unfallsensorsignal verarbeitet und in Abhängigkeit davon die Ansteuerdaten erzeugt und die Personenschutzmittel infolge dessen ansteuert. Die Schnittstelle zur Bereitstellung von wenigstens einem Unfallsensorsignal kann Teil eines System-ASICs sein, es kann ein eigenes elektronisches Bauelement sein, es kann auch softwaremäßig ausgebildet sein beispielsweise als ein Softwaremodul auf einem Prozessor. Die Unfallsensorik beispielsweise eine Beschleunigungssensorik, eine Drehbeschleunigungssensorik, Drehratensensorik, Körperschallsensorik, Luftdrucksensorik oder Umfeldsensorik kann sich innerhalb oder außerhalb des Steuergeräts befinden.

Die Auswerteschaltung kann ebenfalls hard- und/oder softwaremäßig ausgebildet sein. Insbesondere ein Prozessor wie ein Mikrocontroller kann hierfür vorgesehen sein. Auch Dualcore-Architekturen können für die Prozessoren angewendet werden. Auch andere Mehrkernarchitekturen können verwendet werden. Es ist auch möglich einen ASIC zu verwenden, der die entsprechenden Funktionen der Auswerteschaltung in Hardware aufweist. Die Auswerteschaltung verarbeitet das wenigstens eine Unfallsensorsignal und weist dafür ein Echtzeitsteuerelement auf, das ebenfalls hard- und/oder softwaremäßig ausgebildet sein kann. Dieses Echtzeitsteuerelement steuert den zyklischen Ablauf der Verfahrensschritte und ruft dafür folgende Komponenten auf: ein Verwaltungselement zum Füllen des Versendespeichers am Steuergerät mit den ersten Ansteuerdaten aus einem vorhergehenden Zyklus, ein Leseelement zum Einlesen des wenigstens einen Unfallsignals, ein Triggerelement zum Übertragen der ersten Ansteuerdaten aus dem Versendespeicher an die Ansteuerungsschaltung, ein Algorithmuselement zum Bilden einer Ansteuerungsentscheidung in Abhängigkeit von dem wenigstens einen Unfallsignal und ein Logikelement zum Erzeugen der zweiten Ansteuerdaten in Abhängigkeit von der Ansteuerungsentscheidung. All diese Elemente können hard- und/oder softwaremäßig entsprechend dem Echtzeitsteuerelement oder unabhängig davon ausgebildet sein. Das Echtzeitsteuerelement kann noch weitere Elemente, die für die Erfindung nicht notwendig sind aber für die Durchführung des Betriebs des Steuergeräts, zusätzlich aufrufen. Die einzelnen Elemente führen die oben beschriebenen Verfahrensschritte aus.

Die Ansteuerungsschaltung kann ebenfalls hard- und/oder softwaremäßig ausgebildet sein und weist eine Logik zur Interpretation der Ansteuerdaten auf, um die entsprechenden Personenschutzmittel ansteuern zu können. Dafür steuert die Ansteuerungsschaltung beispielsweise einzelne Leistungsschalter auf, die als MOSFETs vorzugsweise ausgebildet sind, um Ansteuerungsenergie zu den Personenschutzmitteln zu transportieren. Die Ansteuerungsenergie bewirkt dann das Ansteuern bzw. Aktivieren dieser Personenschutzmittel.

Durch die in den abhängigen Ansprüchen aufgeführten Maßnahmen und Weiterbildungen sind Verbesserungen des erfindungsgemäßen Verfahrens bzw. Steuergeräts möglich.

Es ist vorteilhaft, dass ein Fahrzeugzustandsspeicher im Steuergerät für die Erzeugung der zweiten Ansteuerdaten vorgesehen ist. Dieser Fahrzeugzustandsdatenspeicher weist Fahrzeugzustandsdaten auf, die angeben welche Personenschutzmittel überhaupt vorhanden sind und auch andere Parameter beinhalten wie beispielsweise eine Sitzbelegung usw., so dass nur für die notwendigen Personen Schutzmittel angesteuert werden. Der Fahrzeugzustandsspeicher kann mit allen bekannten Speichertechnologien hergestellt sein. Eine bevorzugte Variante ist das EEPROM.

Es ist weiterhin vorteilhaft, dass das Triggerelement vom Verwaltungselement derart konfiguriert ist, dass der Versendespeicher für die Übertragung der ersten Ansteuerdaten von dem Triggerelement einen Triggerbefehl erhält, so dass die Übertragung zumindest teilweise parallel, vorzugsweise parallel zu beispielsweise der Bildung der Ansteuerungsentscheidung (Auswertealgorithmus) erfolgt. Die Laufzeit des Algorithmus sollte möglichst größer oder gleich der Übertragungsdauer der Ansteuerdaten sein. Dies ermöglicht eine weitere Einsparung der vorhandenen Laufzeit in der Auswerteschaltung, da bei optimaler Konfiguration durch Parallelübertragung keine zusätzliche Zeit für die Übertragung der Ansteuerdaten benötigt wird.

Es ist weiterhin vorteilhaft, dass für die Übertragung eine digitale serielle Schnittstelle wie die SPI verwendet wird. Dies ermöglicht eine sichere und hardwareredundante Übertragung der Ansteuerdaten. Neben dem SPI sind noch andere digitale serielle Schnittstellen möglich. Dafür ist die digitale serielle Schnittstelle mit dem Versendespeicher für die Übertragung verbunden. Vorteilhafter Weise weist das Echtzeitsteuerelement einen Zähler auf oder ist mit ihm verbunden, der alle 500 Mikrosekunden den Zyklus startet. Damit wird die zyklische Funktion erreicht.

Ausführungsbeispiele der Erfindung sind in der Zeichnung dargestellt und werden in der nachfolgenden Beschreibung näher erläutert.

**Es zeigen**
- Fig. 1: ein Blockschaltbild des erfindungsgemäßen Steuergeräts im Fahrzeug mit angeschlossenen Komponenten,
- Fig. 2: den zyklischen Ablauf des erfindungsgemäßen Verfahrens und
- Fig. 3: ein Flussdiagramm des erfindungsgemäßen Verfahrens.

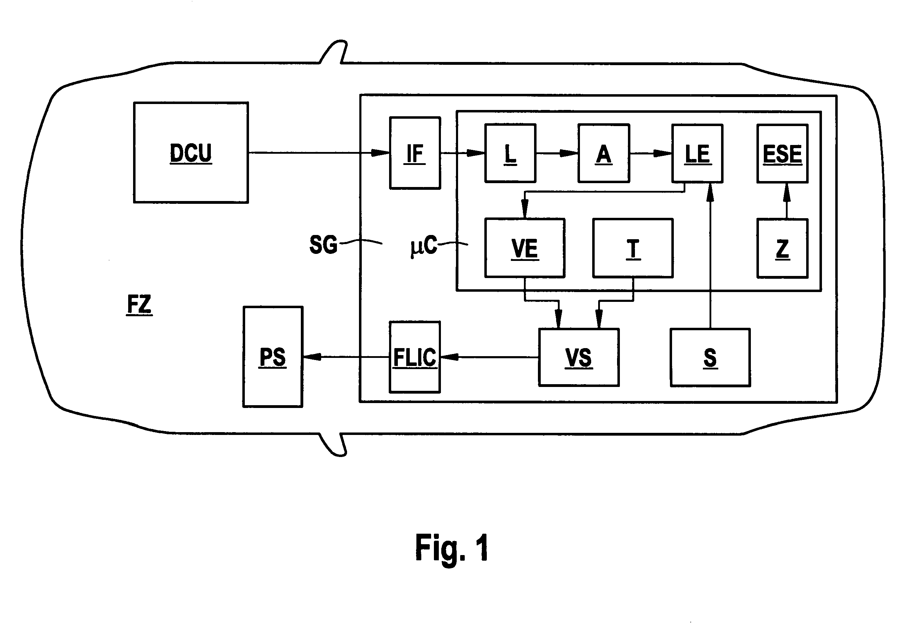

Fig. 1 zeigt ein Fahrzeug FZ mit einem Steuergerät SG zur Ansteuerung von Personenschutzmitteln PS. Dafür erhält das Steuergerät SG von einem Sensorsteuergerät DCU wenigstens ein Unfallsensorsignal, das dann die Schnittstelle IF im Steuergerät SG bereitstellt Das Sensorsteuergerät beherbergt mehrere Unfallsensoren wie Beschleunigungssensoren, die in verschiedenen Empfindlichkeitsachsen jeweils empfindlich sind, Körperschallsensoren, Drehbewegungssensoren usw.. Die entsprechenden Unfallsensordaten werden von dem Sensorsteuergerät DCU an die Schnittstelle IF im Steuergerät SG vorzugsweise digital übertragen. Für die Übertragung kann auch ein Busprotokoll verwendet werden. Diese Anordnung der Sensoren in einem Sensorsteuergerät ermöglicht, dass das Steuergerät SG frei platzierbar im Fahrzeug ist

Die Schnittstelle IF kann beispielsweise Teil eines System-ASICs sein. Die Schnittstelle IF formatiert das wenigstens eine Unfallsensorsignal in ein Übertragungsprotokoll für die Kommunikation innerhalb des Steuergeräts SG um, beispielsweise das SPI-Protokoll. Das wenigstens eine Unfallsensorsignal wird dann an den Mikrocontroller µC übertragen. Der Mikrocontroller µC weist für das Einlesen des wenigstens einen Unfallsensorsignals ein Leselement L auf. Die eingelesenen Daten werden einem Auswertealgorithmus A zugeführt, der die Auslöseentscheidung in Abhängigkeit von dem wenigstens einem Unfallsensorsignal in der bekannten Art und Weise beispielsweise durch Klassifizierung und Schwellwertabfragen bildet. Diese Ansteuerungsentscheidung wird einem Logikmodul LE zugeführt, das in Abhängigkeit von Fahrzeugzustandsdaten aus dem Speicher S, beispielsweise einem EEPROM, die entsprechenden Personenschutzmittel auswählt, die für die entsprechende Ansteuerungsentscheidung angesteuert werden müssen. Dafür werden dann Ansteuerdaten erzeugt. Diese Ansteuerdaten werden dem Verwaltungselement VE zugeführt, das erfindungsgemäß in einem nachfolgenden Zyklus diese Ansteuerdaten in einen Versendespeicher VS schreibt. Durch ein Triggerelement T wird der Versendespeicher VS nach dem Einlesen der Sensordaten aber vor dem Starten des Algorithmus A getriggert, um dann parallel zum ausgeführten Algorithmus A die Ansteuerdaten an die Ansteuerungsschaltung FLIC zu übertragen. Der erfindungsgemäße zyklische Ablauf wird durch das Echtzeitsteuerelement ESE gesteuert und zwar so, dass zu Beginn des Zyklusses das Verwaltungselement VE die Ansteuerdaten aus dem vorhergehenden Zyklus in den Versendespeicher VS schreibt, dann das Einlesen des wenigstens einen Unfallsensorsignals durch das Leselement L erfolgt, dann der Triggerbefehl vom Triggerelement T an den Versendespeicher VS übertragen wird und dann parallel den Algorithmus A an den wenigstens einen Sensorsignal auszuführen und die Übertragung der Ansteuerdaten auf den vorhergehenden Zyklus vom Versendespeicher VS zur Ansteuerungsschaltung FLIC durchzuführen. Dann erfolgt in Abhängigkeit von der gebildeten Ansteuerungsentscheidung die Erzeugung der zweiten Ansteuerdaten durch das Logikelement LE. Dazu werden Fahrzeugzustandsdaten aus dem Speicher S verwendet.

Für den Zyklus ist ein Zähler Z vorgesehen, der dem Echtzeitsteuerelement diesen Zyklus von beispielsweise 500 Mikrosekunden vorgibt. Der Zähler Z kann ebenfalls hard- und/oder softwaremäßig ausgeführt sein.

Die Ansteuerungsschaltung FLIC weist einen Logikteil auf, der die Ansteuerdaten auswerten kann und in Abhängigkeit davon elektrisch steuerbare Leistungsschalter ansteuert, um den Personenschutzmitteln PS die Ansteuerungsenergie zuzuführen.

Komponenten, die für das Verständnis der Erfindung nicht notwendig sind, aber für den Betrieb des Steuergeräts, sind der Einfachheit halber vorliegend weggelassen worden. Dazu zählt beispielsweise die Energieversorgung.

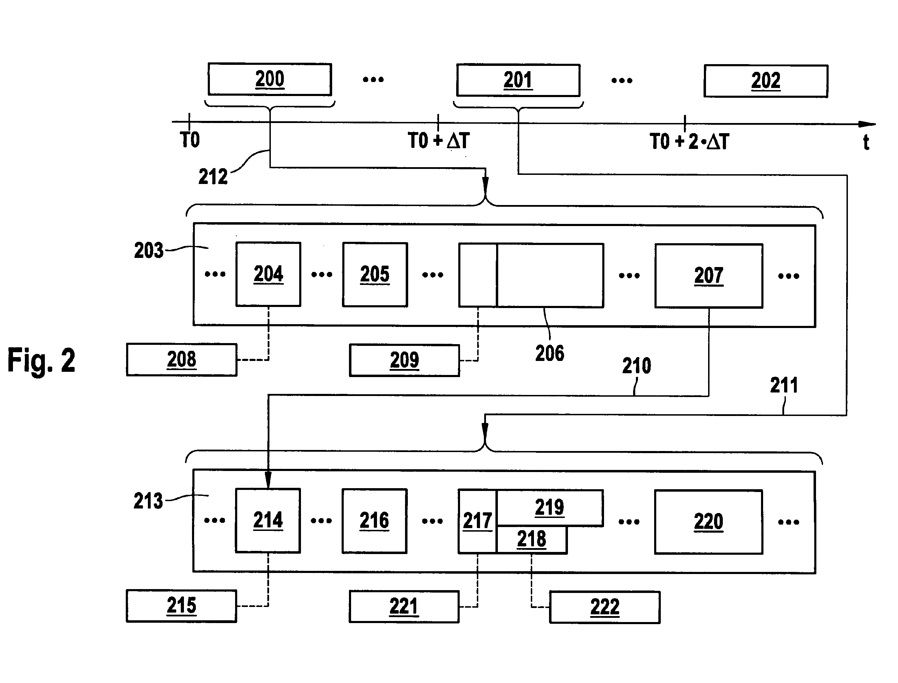

Fig. 2 zeigt in einem Zeitablaufdiagramm den Zyklus des erfindungsgemäßen Verfahrens. Zum Zeitpunkt T0 auf der Zeitachse t startet das Echtzeitsteuerelement 200 den Zyklus 203 indem zumindest das Verwaltungselement 204 zunächst aufgerufen wird. Es ist möglich, dass davor andere Funktionen aufgerufen werden. Das Verwaltungselement VE soll erfindungsgemäß den Versendespeicher VS füllen. Vorliegend wird jedoch nichts passieren, da durch den Block 208 angedeutet wird, dass keine Ansteuerdaten aus dem vorhergehenden Zyklus vorliegen.

Dann ruft das Echtzeitsteuerelement 200 das Leseelement 205 auf, das Beschleunigungswerte als das wenigstens eine Unfallsensorsignal abliest Wiederum können danach andere Komponenten aufgerufen werden. Es folgt dann zumindest der Block 206, der zunächst den Triggerbefehl 209 für den Versendespeicher VS beinhalten kann aber nicht vorliegend, da keine Daten im Versendespeicher VS vorliegen. Der zweite Abschnitt ist der Algorithmus A, der auf die Beschleunigungssensorwerte, die eingelesen wurden, angewendet wird. Wiederum kann nach dem Block 206 das Aufrufen anderer Komponenten, die für das Verständnis der Erfindung nicht notwendig sind, erfolgen. Wichtig für das Verständnis der Erfindung ist jedoch der Block 207, der nach dem Block 206 aufgerufen wird und das Logikelement enthält. Dieses Logikelement bestimmt mit den Fahrzeugzustandsdaten aus dem Speicher S, welche Personenschutzmittel wie anzusteuern sind. Diese Information wird für den nächsten Zyklus 213 durch die Verbindungslinie 210 weitergereicht.

Das Echtzeitsteuerelement 200 hat vorliegend über dem Pfeil 212 den Zyklus 203 aufgerufen. Im nächsten Zyklus TO + ΔT ruft das Echtzeitsteuerelement 201 über den Befehl 211 den Zyklus 213 auf. Nunmehr wird im Verwaltungselement 214 der Versendespeicher VS beispielsweise ein SPI-Puffer mit dem Feuerbefehl, also den Ansteuerdaten des vorhergehenden Zyklus 203 gefüllt, was durch den Block 215 angedeutet wird. In der nachfolgenden Komponente 216, die durch das Echtzeitsteuerelement 201 aufgerufen wird, werden wiederum Beschleunigungswerte eingelesen.

Da nunmehr der Speicher VS mit Daten gefüllt ist, wird im nachfolgenden Block 217, der unmittelbar vor dem Ansteueralgorithmus 219 durch 221 aufgerufen wird, der SPI-Puffer als der Versendespeicher getriggert für die Übertragung der in ihm befindlichen Ansteuerdaten. Der Datentransfer 218 gelingt dann parallel zum Algorithmus 219, der wiederum die eingelesenen Sensorwerte auswertet. Das Logikelement 220 bestimmt wiederum in Abhängigkeit von der Ansteuerungsentscheidung die der Algorithmus 219 gebildet hat, welche Personenschutzmittel anzusteuern sind. Durch den Block 222 wird angedeutet, dass nunmehr die Feuerbefehle zu der Ansteuerungsschaltung FLIC übertragen werden.

Da im Zyklus 203 die Ansteuerungsentscheidung an Hand der Signale gefallen ist, ist anzunehmen, dass im nachfolgenden Algorithmus keine weitere Entscheidung gefällt wird. Dies kann jedoch sein, ist aber eher die Ausnahme.

Im nachfolgenden Zyklus 202 zu T0+2xΔT werden dann die Berechnungen beendet, da die Ansteuerung schon stattgefunden hat, oder weitere Daten ausgewertet, um beispielsweise bei einer Sekundärkollision weitere Personenschutzmittel anzusteuern.

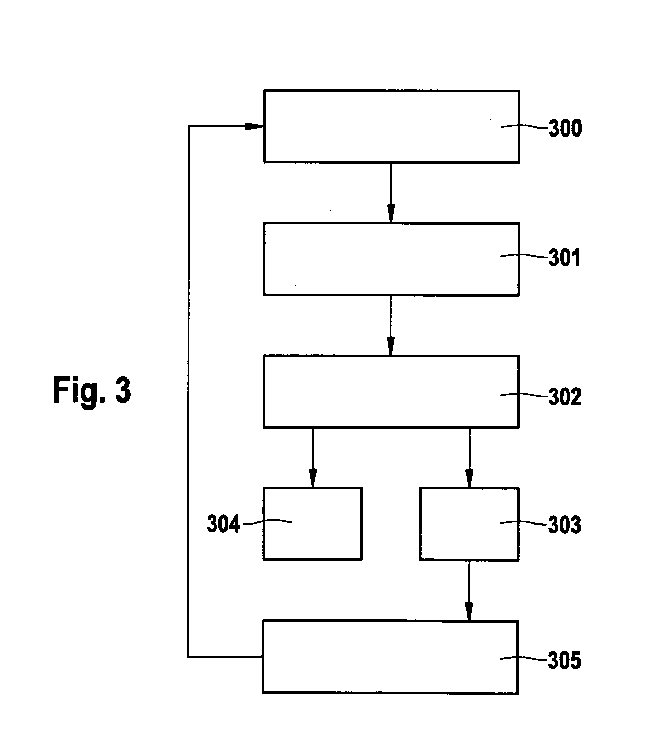

Fig. 3 zeigt in einem Flussdiagramm, dass erfindungsgemäße Verfahren. Im Verfahrensschritt 300 erfolgt das Füllen des Versendespeichers VS durch das Verwaltungselement VE mit Ansteuerdaten aus dem vorhergehenden Zyklus. Im Verfahrensschritt 301 erfolgt das Einlesen des wenigstens einen Unfallsensorsignals durch das Leselement L. Im Verfahrensschritt 302 erfolgt der Triggerbefehl an den Versendespeicher VS. Die Übertragung 304 der Ansteuerdaten an die Ansteuerungsschaltung FLIC parallel zum Auswertealgorithmus 303 an dem eingelesenen wenigsten einen Unfallsensorsignal erfolgen kann. Im Verfahrensschritt 305 erfolgt dann das Erzeugen der Ansteuerdaten in Abhängigkeit von der Ansteuerungsentscheidung, die der Algorithmus 303 gebildet hat. Dazu werden auch Fahrzeugzustandsdaten verwendet, um die vorhandenen Personenschutzmittel entsprechend auszuwählen. Dann wird zu Verfahrensschritt 300 zurückgesprungen, um den nächsten Zyklus zu durchlaufen.

## Patentansprüche

1. Verfahren zur Ansteuerung von Personenschutzmitteln (PS) für ein Fahrzeug (FZ) mit folgenden, aufeinanderfolgenden Verfahrensschritten, die zyklisch wiederholt werden:
- Füllen eines Versendespeichers (VS) mit ersten Ansteuerdaten aus einem vorhergehenden Zyklus
- Einlesen von wenigstens einem Unfallsensorsignal Übertragung der ersten Ansteuerdaten aus dem Versendespeicher (VS) an eine Ansteuerungsschaltung (FLIC)
- Bilden einer Ansteuerungsentscheidung in Abhängigkeit von dem wenigstens einen Unfallsensorsignal; und
- Erzeugen zweiter Ansteuerdaten in Abhängigkeit von der Ansteuerungsentscheidung.

2. Verfahren nach Anspruch 1 **dadurch gekennzeichnet, dass** die zweiten Ansteuerdaten in Abhängigkeit von Fahrzeugzustandsdaten erzeugt werden.

3. Verfahren nach Anspruch 1 oder 2 **dadurch gekennzeichnet, dass** der Versendespeicher (VS) für die Übertragung der ersten Ansteuerdaten einen Triggerbefehl erhält, so dass die Übertragung zumindest teilweise parallel zur Bildung der Ansteuerentscheidung erfolgt.

4. Verfahren nach einem der Ansprüche 1 bis 3 **dadurch gekennzeichnet, dass** für die Übertragung eine digitale serielle Schnittstelle verwendet wird.

5. Verfahren nach einem der vorhergehenden Ansprüche **dadurch gekennzeichnet, dass** der Zyklus alle 500 Mikrosekunden ausgeführt wird.

6. Steuergerät (SG) zur Ansteuerung von Personenschutzmitteln (PS) für ein Fahrzeug (FZ) mit:
- einer Schnittstelle (I F) zur Bereitstellung von wenigstens einem Unfallsensorsignal
- eine Auswerteschaltung (µC) zur Verarbeitung des wenigstens einen Unfallsensorsignals, wobei die Auswerteschaltung (µC) ein Echtzeitsteuerelement (ESE) aufweist, das zyklisch folgende Komponenten·aufruft: ein Verwaltungselement (VE) zum Füllen eines Versendespeichers (VS) im Steuergerät (SG) mit ersten Ansteuerdaten aus einem vorhergehenden Zyklus, einem Leseelement (LE) zum Einlesen des wenigstens einen Unfallsignals, einem Triggerelement (T) zum Übertragen der ersten Ansteuerdaten aus dem Versendespeicher (VS) an eine Ansteuerungsschaltung (FLIC), einem Algorithmuselement zum Bilden einer Ansteuerungsentscheidung in Abhängigkeit von dem wenigstens einen Unfallsensorsignal und einem Logikelement (LE) zum Erzeugen weiterer zweiter Ansteuerdaten in Abhängigkeit von der Ansteuerungsentscheidung
- der Ansteuerungsschaltung (FLIC) zum Ansteuern der Personenschutzmittel in Abhängigkeit von den ersten Ansteuerdaten.

7. Steuergerät nach Anspruch 6 **dadurch gekennzeichnet, dass** ein Fahrzeugzustandsdatenspeicher (S) im Steuergerät (SG) für die Erzeugung der zweiten Ansteuerdaten vorgesehen ist

8. Steuergerät nach Anspruch 6 oder 7 **dadurch gekennzeichnet, dass** das Triggerelement (T) derart konfiguriert ist, dass der Versendespeicher (VS) für die Übertragung der ersten Ansteuerdaten von dem Triggerelement (T) einen Triggerbefehl erhält, so dass die Übertragung zumindest teilweise parallel zur Bildung der Ansteuerungsentscheidung erfolgt.

9. Steuergerät nach einem der Ansprüche 6 bis 8 **dadurch gekennzeichnet, dass** der Versendespeicher (VS) mit einer digitalen seriellen Schnittstelle für die Übertragung verbunden ist.

10. Steuergerät nach einem der Ansprüche 6 bis 9 **dadurch gekennzeichnet, dass** für das Echtzeitsteuerelement (ESE) ein Zähler (Z) vorgesehen ist, der alle 500 Mikrosekunden den Zyklus startet.

## Claims

1. Method for actuating personal protection means (PS) for a vehicle (FZ), having the following successive method steps which are repeated cyclically:
- filling a forwarding memory (VS) with first actuation data from a previous cycle,
- reading in at least one accident sensor signal,
- transmitting the first actuation data from the forwarding memory (VS) to an actuation circuit (FLIC),
- forming an actuation decision on the basis of the at least one accident sensor signal; and
- producing second actuation data on the basis of the actuation decision.

2. Method according to Claim 1, **characterized in that** the second actuation data are produced on the basis of vehicle state data.

3. Method according to Claim 1 or 2, **characterized in that** the forwarding memory (VS) receives a trigger command for transmitting the first actuation data, with the result that the transmission is carried out at least partially in a manner parallel to the formation of the actuation decision.

4. Method according to one of Claims 1 to 3, **characterized in that** a digital serial interface is used for the transmission.

5. Method according to one of the preceding claims, **characterized in that** the cycle is carried out every 500 microseconds.

6. Control device (SG) for actuating personal protection means (PS) for a vehicle (FZ), having:
- an interface (IF) for providing at least one accident sensor signal,
- an evaluation circuit (µC) for processing the at least one accident sensor signal, the evaluation circuit (µC) having a real-time control element (ESE) which cyclically calls the following components: a management element (VE) for filling a forwarding memory (VS) in the control device (SG) with first actuation data from a previous cycle, a reading element (LE) for reading in the at least one accident signal, a trigger element (T) for transmitting the first actuation data from the forwarding memory (VS) to an actuation circuit (FLIC), an algorithm element for forming an actuation decision on the basis of the at least one accident sensor signal and a logic element (LE) for producing further, second actuation data on the basis of the actuation decision,
- the actuation circuit (FLIC) for actuating the personal protection means on the basis of the first actuation data.

7. Control device according to Claim 6, **characterized in that** a vehicle state data memory (S) is provided in the control device (SG) for producing the second actuation data.

8. Control device according to Claim 6 or 7, **characterized in that** the trigger element (T) is configured in such a manner that the forwarding memory (VS) receives a trigger command from the trigger element (T) for transmitting the first actuation data, with the result that the transmission is carried out at least partially in a manner parallel to the formation of the actuation decision.

9. Control device according to one of Claims 6 to 8, **characterized in that** the forwarding memory (VS) is connected to a digital serial interface for the transmission.

10. Control device according to one of Claims 6 to 9, **characterized in that** a counter (Z) is provided for the real-time control element (ESE) and starts the cycle every 500 microseconds.

## Revendications

1. Procédé pour la commande de moyens de protection de personnes (PS) pour un véhicule (FZ) avec les étapes successives suivantes du procédé, lesquelles sont répétées cycliquement :
- le remplissage d'une mémoire d'envoi (VS) avec des premières données de commande d'un cycle précédent,
- la lecture d'au moins un signal de détection d'accident
- la transmission des premières données de commande de la mémoire d'envoi (VS) à l'attention d'un circuit de commande (FLIC) ;
- la formation d'une décision de commande en fonction de l'au moins un signal de détection d'accident ; et
- la génération de secondes données de commande en fonction de la décision de commande.

2. Procédé selon la revendication 1, **caractérisé en ce que** les secondes données de commande sont générées en fonction de données d'état du véhicule.

3. Procédé selon la revendication 1 ou 2, **caractérisé en ce que** la mémoire d'envoi (VS) pour la transmission des premières données de commande contient une instruction de déclenchement de sorte que la transmission s'effectue au moins partiellement en parallèle à la formation de la décision de commande.

4. Procédé selon l'une des revendications 1 à 3, **caractérisé en ce que**, pour la transmission, on utilise une interface sérielle numérique.

5. Procédé selon l'une des revendications précédentes, **caractérisé en ce que** le cycle est exécuté toutes les 500 microsecondes.

6. Appareil de commande (SG) pour la commande de moyens de protection de personnes (PS) pour un véhicule (FZ), avec :
- une interface (IF) pour la mise à disposition d'au moins un signal de détection d'accident,
- un circuit d'évaluation (µC) pour le traitement de l'au moins un signal de détection d'accident, dans lequel le circuit d'évaluation (µC) présente un élément de commande en temps réel (ESE), lequel appelle cycliquement les composants suivants : un élément de gestion (VE) pour remplir une mémoire d'envoi (VS) dans l'appareil de commande (SG) avec des premières données de commande d'un cycle précédent, un élément de lecture (LE) pour la lecture de l'au moins un signal d'accident, un élément de déclenchement (T) pour la transmission des premières données de commande de la mémoire d'envoi (VS) à l'attention d'un circuit de commande (FLIC), un élément d'algorithme pour la formation d'une décision de commande en fonction de l'au moins un signal de détection d'accident et un élément logique (LE) pour la génération d'autres secondes données de commande en fonction de la décision de commande,
- le circuit de commande (FLIC) pour la commande des moyens de protection des personnes en fonction des premières données de commande.

7. Appareil de commande selon la revendication 6, **caractérisé en ce que** l'on prévoit une mémoire de données d'état du véhicule (S) dans l'appareil de commande (SG) pour la génération des secondes données de commande.

8. Appareil de commande selon la revendication 6 ou 7, **caractérisé en ce que** l'élément de déclenchement (T) est configuré de manière à ce que la mémoire d'envoi (VS) obtienne une instruction de déclenchement pour la transmission des premières données de commande de la part de l'élément de déclenchement (T) de telle sorte que la transmission s'effectue au moins partiellement en parallèle à la formation de la décision de commande.

9. Appareil de commande selon l'une des revendications 6 à 8, **caractérisé en ce que** la mémoire d'envoi (VS) est en liaison avec une interface sérielle numérique pour la transmission.

10. Appareil de commande selon l'une des revendications 6 à 9, **caractérisé en ce que** l'on prévoit un compteur (Z) pour l'élément de commande en temps réel (ESE), lequel démarre le cycle toutes les 500 microsecondes.
